# EUROPEAN PATENT APPLICATION

(11) **EP 4 105 601 A1**
(43) Date of publication of application: **21.12.2022**
(21) Application number: 22178881.3
(22) Date of filing: 14.06.2022
(51) Int. Cl.: G01C 21/04, G01C 21/20

(54) **METHOD AND DEVICE FOR NAVIGATION PLANNING**

(30) Priority: 15.06.2021 JP 2021099670; 29.06.2021 EP 21182505; 15.11.2021 EP 21208198
(71) Applicant: FURUNO ELECTRIC CO., LTD., Nishinomiya-City Hyogo 662-8580 (JP)
(72) Inventor: OKUDA, Masato, Nishinomiya-City, 662-8580 (JP); ISHIHARA, Shinji, Nishinomiya-City, 662-8580 (JP)
(74) Representative: Müller Hoffmann & Partner

(57) **Abstract**

A navigation planning device (101) comprises
a map data receipt unit (119);
a waypoint receipt unit (121), to receive already accepted waypoints (103b, 103c, ..., 103f);
a potential waypoint receipt unit (123) with display and
receiving input by a user (105), specifying the position of a potential waypoint (204a, 204b) following the latest accepted waypoint (202), the potential waypoint (204a, 204b) being movable on the map;
a position specifying unit (125) configured to each time: define a first bar (208) and a second bar (210), and calculate an angle (506) between the bars,
wherein an activating signal is output when as a result of the calculated angle becomes equal to a value that is equal to a predetermined fixed value or is a value included in a predetermined interval included in the interval of 85° to 95°.

## Description

### TECHNICAL FIELD

An example embodiment of the present invention generally relates to a navigation planning device for planning a navigation route.

### BACKGROUND OF THE INVENTION

An Electronic Chart Display and Information System (ECDIS) displays navigation route information for one or more vessels, where the one or more vessels are navigating through a water body, for example a river, or a sea or the like. The ECDIS displays a chart of desired area on a display by performing software processing of electronic chart data. The ECDIS may comprise a touch sensitive display screen. Therefore, the navigation route can be set on the chart displayed on the touch display screen by touching desired locations on the chart or by moving a cursor. The navigation route is established by determining a navigation starting point (a starting point) and a navigation destination point (a destination point) of the vessel, and in an interval, determining one or more points called "waypoint" through which the vessel should pass. These waypoints must be accurately located to not cause obstruction to the vessel on the navigation route. When determining position of the waypoints, it is to be ensured that there are no obstructions such as a buoy, a lighthouse or the like near the navigation route of the vessel. Therefore, when there are obstructions (also referred as a target, or target objects) such as the lighthouse or the buoy near the navigation route, the position of the waypoint is set based on a distance from the target and a bearing thereby ensuring that the navigation route is safe from dangerous areas such as land and shallow water.

In the conventional systems, when measuring the distance and the direction of the waypoint to be set from the target, it is necessary to set the navigation route while confirming the distance and the position every time the position of the waypoint is changed by using a separate tool. The tool obtains the distance and the direction separately from input of the position of the waypoint. For example, in JP-PA-2018-150024, the navigation route planning system generates a route line by connecting sequentially selected previous waypoints to a current waypoint being entered. Further, in order to set the next waypoint from a latest set waypoint i.e., the current waypoint, a guideline value is displayed at the position of the latest waypoint along with azimuth. Additionally, since the conventional navigation apparatus displays only the guideline value for finding the next waypoint, it is not possible to dynamically change positions of the waypoint and obtain distance of the target along with the azimuth in real time. Further, there is no means in the prior art for a user to operate a line indicating the azimuth and a scale indicating the distance of the target, and to superimpose the line on the target object, which is troublesome.

Therefore, there is a need for a navigation device capable of determining position of a potential waypoint such that the position of the potential waypoint is within a prescribed angle and distance from the target thereby efficiently setting a safe navigation route for the vessel.

### SUMMARY OF THE INVENTION

In order to solve the foregoing problem, the present invention provides a navigation planning device.

The navigation planning device for obtaining a navigation route of a movable body that is composed of accepted waypoints, may comprise:
a map data receipt unit configured to receive map data, wherein the map data include position information of a single target object or of a plurality of target objects;
a waypoint receipt unit configured to receive a plurality of already accepted waypoints including a latest accepted waypoint for the navigation route, the accepted waypoints not moveable by a specific kind of user input (see the kind of user input that is used for moving as defined below);
a potential waypoint receipt unit comprising a display and configured to receive first input by a user, the input specifying and thus defining, on the map, the position of a potential waypoint following in the navigation route the latest accepted waypoint, the potential waypoint being movable by the user on the map for newly defining same by additional input of the specific kind with regard to the display (hence, the user may use the specific input only with respect to the potential waypoint, but not with respect to the already accepted waypoints);
a position specifying unit configured to each time the potential waypoint is defined:
   define a first bar that connects the latest accepted waypoint with the potential waypoint, define a second bar that connects the potential waypoint with one of the target objects, and calculate an angle (specifically, the geometrical angle) between the first bar and the second bar on the map,
   wherein an activating signal is output by the position specifying unit when as a result of the first input or of the movement of the potential waypoint by the user with additional input following the first input the calculated angle becomes equal to a value that is a) equal to a predetermined fixed value, or that is b) a value included in a predetermined interval included in the interval of 85° to 95°.

The map data may as well be called chart data. The target objects may as well be called targets. Using a different terminology, thus, the navigation planning device according to an embodiment may be defined to comprise a chart data receipt unit configured to receive a chart data, the chart data including position information of one or a plurality of targets; a waypoint receipt unit configured to receive a plurality of waypoints including a latest waypoint for a navigation route of a movable body; a potential waypoint receipt unit configured to receive a potential waypoint, the potential waypoint being movable on the chart; and the navigation planning device is characterized by: a position specifying unit configured to: determine a position of the potential waypoint as a next waypoint following the latest waypoint, the potential waypoint being movable, the potential waypoint is determined by: receive a current position data of the potential waypoint; receive position information of the plurality of targets located within a predetermined distance from the current position of the potential waypoint; calculate an angle between a first bar and a second bar on the chart, where the first bar is to connect the latest waypoint with the potential waypoint and the second bar is to connect the potential waypoint with the plurality of targets; and output an activation signal when the calculated angle is equal to a threshold value.

Optionally, the system may calculate a distance between the potential waypoint and each of the plurality of targets. The distance may be used when defining whether or not to output an activation signal. Specifically, the position specifying unit may be configured to calculate a distance between the potential waypoint and each of the target objects for which position information has been received by the map data receipt unit, and wherein the second bar connects the potential waypoint with the closest target object.

According to an example embodiment, the navigation planning device further comprise a waypoint fix unit configured to generate a waypoint fix signal upon receiving the activation signal; and the position specifying unit is further configured to add the potential waypoint to the navigation route based on the waypoint fix signal.

According to an example embodiment, the fixed value is preset, e.g., by a specific input provided made before starting the input of the route..

According to an example embodiment, when the fixed value is always equal to 90 degrees.

According to an example embodiment, the position specifying unit is further configured to calculate an intersection position of two circles, where first circle is a circle having a diameter of a line connecting the target and the latest waypoint, and the second circle is a circle having a radius of a given distance around the target; and output the calculated intersection position to indicate the distance between the potential waypoint and the target.

According to an example embodiment, the plurality of targets / target objects comprises one or more of a stationery landmarks objects and a moving object.

According to an example embodiment, to receive position information of the plurality of targets/ target objects , the position specifying unit is further configured to search from the map data (chart data), the stationery landmark object and the moving object located within the predetermined distance.

According to an example embodiment, the positional information of the plurality of target objects further comprises a plurality of concentric half or full circles arranged round the target to indicate distance from the plurality of targets/ target objects.

According to an example embodiment, the positional information of the potential waypoint further comprises a plurality of concentric circles arranged around the potential waypoint to indicate distance from the potential waypoint.

One may define a first circle and a second circle, wherein the diameter of the first circle is provided by the first bar and wherein the second circle is a circle having a predetermined radius defined around a respective target object, wherein the position specifying unit is further configured to calculate an intersection position of the two circles, and to use the calculated intersection position to calculate the distance between the potential waypoint and the respective target object.

According to an example embodiment, the navigation planning device further comprises a display, where the display is one or more of a touch screen display, and an Electronic Chart Display Information System (ECDIS) configured to receive at least one of touch based input and a mouse based input, the display configured to: display chart information and position information of one or a plurality of targets/ target objects; display the plurality of (already accepted) waypoints and the potential waypoint; and display the first bar and the second bar; change one or more of colour, contrast, thickness or aspect of the first bar or the second bar based on the activation signal. In addition, the display displays a line or a plurality of dots arranged to form a circle, where circumference of the circle is to connect the potential waypoint with the target/ target object.

One may define that one of the following features is provided:
a) the display is a touch screen and the specific kind of input relates to the user touching at specific locations on the touch screen;
b) the display is a display panel with a cursor and the specific kind of input relates to moving the cursor on said display panel, in particular by means of a computer mouse or a touchpad;
c) the specific kind of input relates to inputting numerical data, in particular by means of a keyboard.
According to an example embodiment, a navigation planning method for obtaining a navigation route of a movable body, the navigation route composed of accepted waypoints, is provided, the navigation planning method comprising:
receiving map data, wherein the map data includes position information of a single target object or of a plurality of target objects;
receiving a plurality of already accepted waypoints including a latest accepted waypoint for the navigation route, the accepted waypoints not moveable by a specific kind of user input;
receiving first input, by a user, the input specifying and thus defining, on the map, the position of a potential waypoint following in the navigation route the latest accepted waypoint, and receiving additional input of the specific kind for moving and thus newly defining the potential waypoint on the map;
each time the potential waypoint is newly defined: defining a first bar that connects the latest accepted waypoint with the potential waypoint, defining a second bar that connects the potential waypoint with one of the target objects, and calculating an angle between the first bar and the second bar on the map; and
outputting an activating signal when as a result of the first input or the movement of the potential waypoint by the user with additional input following the first input the calculated angle becomes equal to a value that is equal to a predetermined fixed value or is a value included in a predetermined interval included in the interval of between 85° and 95°.

Using another terminology, a navigation planning method according to an embodiment is provided, including receiving, a chart data, where the chart data includes position information of one or a plurality of targets; receiving, a plurality of waypoints including a latest waypoint for a navigation route of a movable body; receiving, a potential waypoint, the potential waypoint being movable on the chart; and where the navigation planning method is characterized by: determining a position of the potential waypoint, as a next waypoint following the latest waypoint, the potential waypoint being movable, where the potential waypoint is determined by: receiving a current position data of the potential waypoint; receiving position information of the plurality of targets located within a predetermined distance from the current position of the potential waypoint; calculating a distance between the potential waypoint and each of the plurality of targets; calculating an angle between a first bar and a second bar on the chart, where the first bar is to connect the latest waypoint with the potential waypoint and the second bar is to connect the potential waypoint with the plurality of targets; and outputting an activation signal when the calculated angle is equal to a threshold value.

According to an example embodiment, navigation planning method further comprises generating, a waypoint fix signal upon receiving the activation signal; and adding the potential waypoint to the navigation route based on the waypoint fix signal. When an activation signal is generated, a decision may be made to the next waypoint by waiting for a decision input signal from the user.

According to an example embodiment, the navigation planning method further comprises calculating an intersection position of two circles, where first circle is a circle having a diameter of a line connecting the target and the latest waypoint, and second circle is a circle having a radius of a given distance around the target; and outputting the calculated intersection position to indicate the distance between the potential waypoint and the target.

According to an example embodiment, where receiving position information of the plurality of targets further comprises searching from the chart data, the stationery landmark object and the moving object located within the predetermined distance.

According to an example embodiment, a non-transitory computer readable medium, the medium storing instructions that, when executed by one or more processors, cause a computing device to perform a method that comprises:
receiving map data, wherein the map data includes position information of a single target object or of a plurality of target objects;
receiving a plurality of already accepted waypoints including a latest accepted waypoint for the navigation route, the accepted waypoints not moveable by a specific kind of user input;

receiving first input, by a use, the input specifying and thus defining, on the map, the position of a potential waypoint following in the navigation route the latest accepted waypoint, and receiving additional input of the specific kind for moving and thus newly defining the potential waypoint on the map;
each time the potential waypoint is newly defined: defining a first bar that connects the latest accepted waypoint with the potential waypoint, defining a second bar that connects the potential waypoint with one of the target objects, and calculating an angle between the first bar and the second bar on the map; and outputting an activating signal when as a result of the first input or the movement of the potential waypoint by the user with additional input following the first input the calculated angle becomes equal to a value that is equal to a predetermined fixed value or is a value included in a predetermined interval included in the interval of 85° to 95°.

Using another terminology, an example embodiment, non-transitory computer readable medium is provided, the non-transitory computer readable medium storing instructions that, when executed by one or more processors, cause a computing device to perform a method that comprises: receiving, a chart data, wherein the chart data includes position information of one or a plurality of targets; receiving, a plurality of waypoints including a latest waypoint for a navigation route of a movable body; receiving, a potential waypoint, the potential waypoint being movable on the chart; and where the computing device to perform the method is characterized by: determining a position of the potential waypoint, as a next waypoint following the latest waypoint, the potential waypoint being movable, where the potential waypoint is determined by: receiving a current position data of the potential waypoint; receiving position information of the plurality of targets located within a predetermined distance from the current position of the potential waypoint; calculating a distance between the potential waypoint and each of the plurality of targets; calculating an angle between a first bar and a second bar on the chart, wherein the first bar is to connect the latest waypoint with the potential waypoint and the second bar is to connect the potential waypoint with the plurality of targets and outputting an activation signal when the calculated angle is equal to a threshold value.

The foregoing summary is illustrative only and is not intended to be in any way limiting. In addition to the illustrative aspects, embodiments, and features described above, further aspects, embodiments, and features will become apparent by reference to the drawings and the following detailed description.

### EFFECT(S) OF THE INVENTION

In various embodiments, a device, and a method for planning a navigation route for a vessel or an aircraft is provided. The navigation planning device enables efficient determination of waypoints that are located at a prescribed angle and distance of interest from a target/ a target object in a navigation route thereby ensuring safe navigation for the vessel or the aircraft.

### BRIEF DESCRIPTION OF THE DRAWINGS

The present invention is illustrated by way of example and not by way of limitation in the figures of the accompanying drawings, in which the like reference numerals indicate like elements and in which:
FIG. 1A is a schematic diagram that exemplarily illustrates working environment of a navigation planning device, in accordance with an example embodiment;
FIG. 1B illustrates a block diagram of the navigation planning device, exemplarily illustrated in FIG. 1A, in accordance with an example embodiment;
FIG. 2A illustrates a user interface, where the position of a potential waypoint is changed, in accordance with an example embodiment;
FIG. 2B illustrates a user interface displaying an activation signal when the position of the potential waypoint is determined, in accordance with an example embodiment;
FIG. 3A illustrates a user interface displaying positional information of plurality of targets, in accordance with an example embodiment;
FIG. 3B illustrates a user interface displaying the activation signal along with the positional information of plurality of targets, in accordance with an example embodiment;
FIG. 4A illustrates a user interface displaying positional information of the potential waypoint, in accordance with an example embodiment;
FIG. 4B illustrates a user interface displaying the activation signal along with the positional information of the potential waypoint, in accordance with an example embodiment;
FIG. 5A illustrates a user interface displaying plurality of dots arranged to form a first circle, in accordance with an example embodiment;
FIG. 5B illustrates a user interface displaying the activation signal along with the plurality of dots arranged to form a first circle, in accordance with an example embodiment;
FIG. 6 is a flowchart that illustrates steps of a navigation planning method executed by the navigation planning device, in accordance with an example embodiment;
FIG. 7 is a flowchart that illustrates steps for determining position of potential waypoint executed by a position specifying unit, in accordance with an example embodiment; and
FIG. 8 is an extended flowchart that illustrates steps for obtaining a naval route as a sequence of already accepted waypoints.

### DETAILED DESCRIPTION OF THE INVENTION

In the following description, for purposes of explanation, numerous specific details are set forth in order to provide a thorough understanding of the present invention. It will be apparent, however, to one skilled in the art that the present invention may be practiced without these specific details. In other instances, systems and methods are shown in block diagram form only in order to avoid obscuring the present invention.

Some embodiments of the present invention will now be described more fully hereinafter with reference to the accompanying drawings, in which some, but not all, embodiments of the invention are shown. Indeed, various embodiments of the invention may be embodied in many different forms and should not be construed as limited to the embodiments set forth herein; rather, these embodiments are provided so that this invention will satisfy applicable legal requirements. Like reference numerals refer to like elements throughout. As used herein, the terms "data," "content," "information," and similar terms may be used interchangeably to refer to data capable of being transmitted, received and/or stored in accordance with embodiments of the present invention. Further, the terms "processor", "controller", "processing part", and "processing circuitry" and similar terms may be used interchangeably to refer to the processor capable of processing information in accordance with embodiments of the present invention. Further, the terms "electronic equipment", "electronic devices" and "devices" are used interchangeably to refer to electronic equipment monitored by the system in accordance with embodiments of the present invention. Thus, use of any such terms should not be taken to limit the spirit and scope of embodiments of the present invention.

The embodiments are described herein for illustrative purposes and are subject to many variations. It is understood that various omissions and substitutions of equivalents are contemplated as circumstances may suggest or render expedient but are intended to cover the application or implementation without departing from the spirit or the scope of the present invention. Further, it is to be understood that the phraseology and terminology employed herein are for the purpose of the description and should not be regarded as limiting. Any heading utilized within this description is for convenience only and has no legal or limiting effect.

As used in this specification and claims, the terms "for example" "for instance" and "such as", and the verbs "comprising," "having," "including" and their other verb forms, when used in conjunction with a listing of one or more components or other items, are each to be construed as open ended, meaning that that the listing is not to be considered as excluding other, additional components or items. Other terms are to be construed using their broadest reasonable meaning unless they are used in a context that requires a different interpretation.

One of the objectives of the present invention is to determine a safe route for a vessel or an aircraft during navigation. The navigation route should be set such that the vessel does not get stuck in land or in shallow waters present in water body. The water body may comprise a sea, an ocean, a river, or the like. The safe navigation route ensures a vessel on the navigation route avoids shallow waters and land in the water body. To ensure that the vessel navigating the water body avoids shallow waters, mud, land or the like, it is important to set navigation route that is at a certain distance away from the plurality of targets. Further, in case the vessel is required to reach shore, it is important to set a waypoint on the navigation route that is perpendicular to the plurality of targets to ensure that bearing of the ship is at 90 degrees thereby enabling the ship to reach the shore efficiently. The navigation route is determined by a navigation planning device by determining position of a potential waypoint on an electronic chart by referring to a target such as a lighthouse or a buoy near the route. The electronic chart comprises positional information related to the target. Further, position of the potential waypoint is set on the basis of a distance from the target and the bearing. By doing so, it is possible to confirm that the route is safe and directed to a destination away from dangerous areas such as land and shallow water. The potential waypoint is subsequently added to the navigation route comprising a plurality of waypoints. The waypoints may not necessarily be route origination and route destination points but may be any passing point or any arbitrary point that is used for setting up the navigation route.

Further, the navigation planning device is configured to receive a potential waypoint and determine position of the potential waypoint as a next waypoint following a latest waypoint. The potential waypoint is movable on the electronic chart. A position of the potential waypoint is selected tentatively. The tentative position of the potential waypoint can be moved or adjusted in order to optimize the navigation route by simple drag and drop or by moving back and forth on the display screen.

Further, the position of the potential waypoint is set with reference to the plurality of targets such that the potential waypoint is at a prescribed angle and distance from the target that is nearby the potential waypoint. The prescribed angle is an angle formed between a first bar that connects the latest waypoint with the potential waypoint and a second bar that connects the potential waypoint with the target. When the position of the potential waypoint is changed, the first bar and the second bar is also configured to move along. Further, when the potential waypoint is determined, the navigation device is configured to output an activation signal such that the visual display of the first bar and the second bar is changed to denote that the potential waypoint is at the prescribed angle and distance from the target. Further, the navigation device provides a waypoint fix signal upon receiving the activation signal so that the potential waypoint is added to the navigation route of the vessel as a next waypoint following the latest waypoint. The user can check the distance between the potential waypoint and the target before determining whether the potential waypoint can be added to the next waypoint.

In this way, the navigation planning device allows accurate determination of the waypoints and consequently enables determining an optimized navigation route that is safe for navigation.

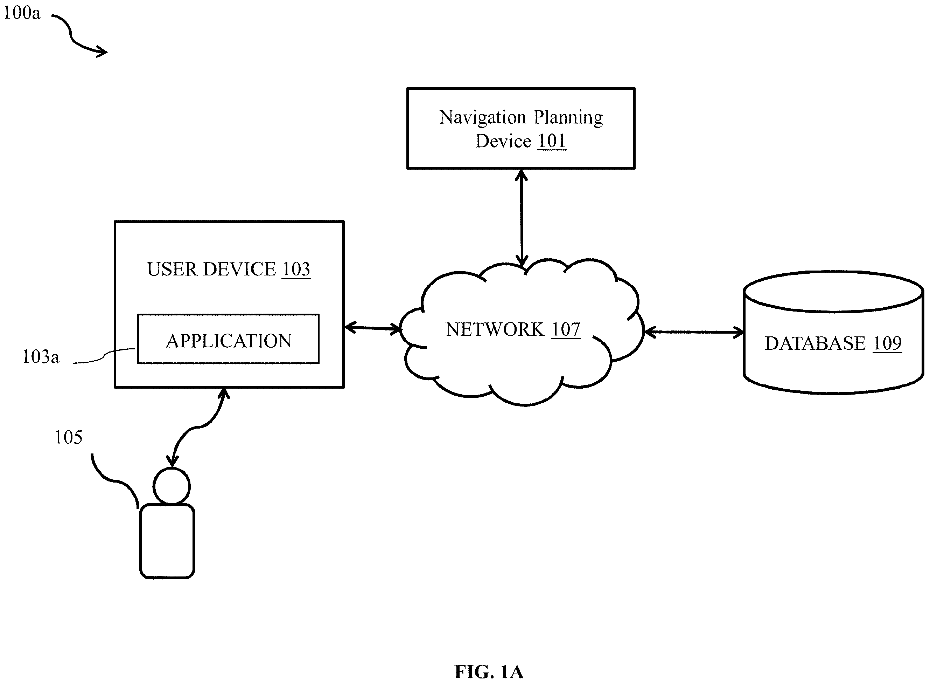

FIG. 1A is a schematic diagram that exemplarily illustrates working environment 100a of a navigation planning device 101, in accordance with an example embodiment. In an example embodiment, the navigation planning device 101 is installed at a vessel navigating in a water body. In an example embodiment, the navigation planning device 101 may be installed on an aircraft. The navigation planning device 101 installed on the vessel may be used to determine a safe navigation route in the water body. The navigation planning device 101 may obtain inputs from a user 105, where the inputs may comprise position information of a plurality of waypoints including a latest waypoint and position information of a potential waypoint (not shown in Figure) in between the latest waypoint point and a target. The position information may comprise position data such as longitude or latitude, direction data, or GPS coordinates, distance from latest waypoint, distance from the target, or the like. The navigation planning device 101 is communicatively coupled with a user device 103, and a database 109, via a network 107.

The user device 103 comprises an application 103a installed in it, where the application 103a displays different information associated with navigation for the user 105 operating the user device 103. The user device 103 may be any user accessible device such as a smartphone, a portable computer, a display unit, or the like. In an example embodiment, the user device 103 may include Electronic Chart Display and Information System (ECDIS). The user device 103 uses the application 103a to display different navigation information such as sea maps, tidal currents of the sea, or the like on a display screen of the user device 103. In an example embodiment, the user device 103 may be configured with a touch screen display.

Further, the database 109 may store updated navigation maps, latest information about the weather forecast, information about the tidal currents, nautical charts that may be used by the vessel for navigating in the water body and determining a safe navigation route. The database 109 may further comprise dangerous locations in the water body such as location of a whirlpool, shallow waters, mud, land or the like. The database 109 may comprise navigation data such as information on plurality of targets such as a buoy, a light house or the like, information related to salinity, water temperature and air temperature, atmospheric pressure, and wind (speed, gusts, and direction), geographical location in terms of longitude and latitude of the vessel, or the like. The database 109 may also comprise updated navigation maps, latest information about the weather forecast, or the like that may be used by an aircraft.

In alternate embodiments, the database 109 may be embodied as a map database and may represent a compiled navigation database that may be used in or with the user device 103 to provide navigation and/or map-related functions to the user 105. In such a case, the database 109 may be downloaded or stored on the user device 103.

The network 107 may comprise suitable logic, circuitry, and interfaces that may be configured to provide a plurality of network ports and a plurality of communication channels for transmission and reception of data, such as selected positions of navigation start point S, navigation destination point D, plurality of waypoints (103b, 103c, ..., 103f) or the like. Each network port may correspond to a virtual address (or a physical machine address) for transmission and reception of the communication data. For example, the virtual address may be an Internet Protocol Version 4 (IPv4) (or an IPv6 address) and the physical address may be a Media Access Control (MAC) address. The network 107 may be associated with an application layer for implementation of communication protocols based on one or more communication requests from at least one of the one or more communication devices. The communication data may be transmitted or received, via the communication protocols. Examples of such wired and wireless communication protocols may include, but are not limited to, Transmission Control Protocol and Internet Protocol (TCP/IP), User Datagram Protocol (UDP), Hypertext Transfer Protocol (HTTP), File Transfer Protocol (FTP), ZigBee, EDGE, infrared (IR), IEEE 802.11, 802.16, cellular communication protocols, and/or Bluetooth (BT) communication protocols.

Examples of the network 107 may include, but is not limited to a wireless channel, a wired channel, a combination of wireless and wired channel thereof. The wireless or wired channel may be associated with a network standard which may be defined by one of a Local Area Network (LAN), a Personal Area Network (PAN), a Wireless Local Area Network (WLAN), a Wireless Sensor Network (WSN), Wireless Area Network (WAN), Wireless Wide Area Network (WWAN), a Long Term Evolution (LTE) network, a plain old telephone service (POTS), and a Metropolitan Area Network (MAN). Additionally, the wired channel may be selected on the basis of bandwidth criteria. For example, an optical fiber channel may be used for a high bandwidth communication. Further, a coaxial cable-based or Ethernet-based communication channel may be used for moderate bandwidth communication.

Some embodiments are based on the recognition that in order to determine the navigation route optimized for safety, the potential waypoints must be located at a prescribed angle and desired distance from the target so that the shallow waters and land are avoided during the navigation route.

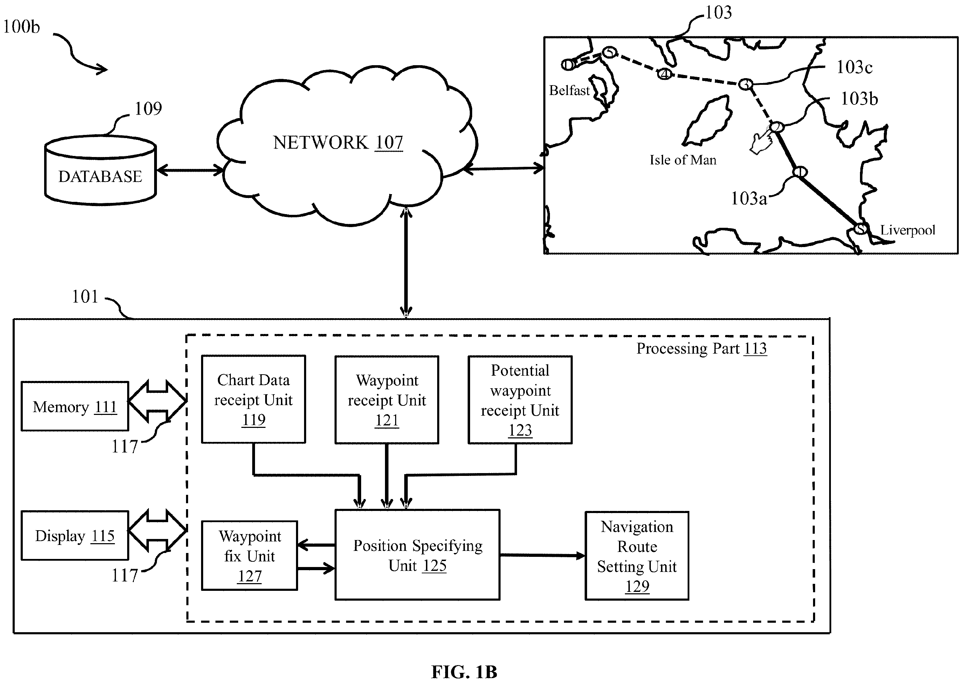

To that end, the navigation planning device 101 enables the user 105 to select the potential waypoint. The potential waypoint corresponds to potential positions, which can be adjusted or deleted based on the requirement in real time to determine an optimized navigation route. Thus, the navigation planning device 101 enables the user 105 to adjust the location of the potential waypoint dynamically so that the potential waypoint is situated at a desired distance and angle from the target in order to determine the optimized navigation route. The location of the potential waypoint is adjusted by the user 105 on a user interface of the user device 103 of the navigation planning device 101. Alternatively, the locations may be adjusted by the user 105 remotely by using the user device 103 which is connected to the navigation planning device 101 via the network 107. For example, in the user device 103 that is configured with the touch screen display displaying the map, the position of the potential waypoint can be adjusted by dragging and dropping position of the potential waypoint on the map by using the touch screen display. A detailed analysis of the proposed navigation planning device 101 is described below with respect to FIG. 1B.

FIG. 1B illustrates a block diagram 100b of the navigation planning device 101, exemplarily illustrated in FIG. 1A, in accordance with an example embodiment. The navigation planning device 101 includes a processing part 113 configured to execute stored instructions, as well as a memory 111 that stores instructions that are executable by the processing part 113. The memory 111 is further configured to store a chart data for navigation, where the chart data may comprise map of the water body, position information related to the plurality of targets, and other navigational information. The memory 111 can include random access memory (RAM), read only memory (ROM), flash memory, or any other suitable memory systems. The processing part 113 is connected through a bus 117 to the memory 111.

Further, the navigation planning device 101 comprises a display 115, where the display 115 is configured to display chart information and position information of one or a plurality of targets. The display 115 is one or more of a touch screen display, and an Electronic Chart Display Information System (ECDIS) configured to receive at least one of touch-based input and a mouse based input. The chart information may be present in the user device 103 and comprises a navigation start point S, a destination point D, a plurality of waypoints (103b, 103c, ..., 103f) having a latest waypoint (103c), and a potential waypoint (not shown in Figure). The display 115 is further configured to receive the plurality of waypoints (103b, 103c, ..., 103f) between the navigation start point S and the navigation destination point D. Further, the display 115 is configured to provide data obtained from the user 105 such as navigation start point, navigation destination point, plurality of waypoints (103b, 103c, ..., 103f), latest waypoint (103c), potential waypoint, or the like to the processing part 113 via the bus 117.

The processing part 113 includes a chart data receipt unit 119, a waypoint receipt unit 121, a potential waypoint receipt unit 123, a position specifying unit 125, a waypoint fix unit 127, and a navigation route setting unit 129 that outputs a navigation route. Further, different components of the processing part 113 are connected to the user device 103, where the application 103a may be run at the user device 103 to display sea map on the display screen of the user device 103. Further, the screen of the user device 103 may be the touch screen enabled to obtain inputs from the user 103.

The processing part 113 is configured to use the chart data receipt unit 119, where the chart data receipt unit 119 is configured to receive a chart data. The chart data includes position information of one or a plurality of targets. The plurality of targets may be a landmark object such as a light house, buoy, and the like. The processing part 113 is further configured to use the waypoint receipt unit 121 to receive the plurality of waypoints (103b, 103c, ..., 103f) including the latest waypoint (103c) for a navigation route of a movable body such as a vessel or an aircraft. The locations of the navigation start point S, the plurality of waypoints (103b, 103c, ..., 103f), and the navigation destination point D may be specified, by the user 105, on the map displayed on the touch screen display panel of the display 115 by directly touching at the specific locations or moving a cursor on the display panel, or by inputting numerical data on the map. In another embodiment, the user 105 may use the user device 103 to remotely specify locations of the navigation start point S, the plurality of waypoints (103b, 103c, ..., 103f), and the navigation destination point D on the map displayed on the touch screen of the user device 103. The plurality of waypoints (103b, 103c, ..., 103f) comprises one or more previously selected waypoints, and the latest waypoint 103c.

The processing part 113 is configured to use the potential waypoint receipt unit 123 to receive potential waypoints. The potential waypoint is provided by the user 105 through the user device 103 by touching a region of interest on the map displayed on the touch screen panel. The potential waypoint is movable on the map. The potential waypoint receipt unit 123 is configured to receive position information of the potential waypoint when the potential waypoint is being moved.

Further, in order to determine the safest navigation route, a positional relationship between the latest waypoint 103c, the plurality of targets (not shown in figure) and the potential waypoint is required (not shown in figure).

To that end, the processing part 113 is configured to use the position specifying unit 125, where the position specifying unit 125 is configured to determine a position of the potential waypoint as a next waypoint following the latest waypoint 103c. The position specifying unit 125 receives a current position data of the potential waypoint from the potential waypoint receipt unit 123, position information of the latest waypoint 103c from the waypoint receipt unit 121. Further, the position specifying unit 125 receives position information of the plurality of targets located within a predetermined distance from the potential waypoint from the chart data receipt unit 119. Subsequently, the position specifying unit 125 calculates a distance between the potential waypoint and each of the plurality of targets and calculates an angle between the latest waypoint 103c, the potential waypoint, and the plurality of targets. When the the angle is equal to a threshold value, the position specifying unit 125 provides an activation signal. The waypoint fix unit 127 receives the activation signal and is configured to generate a waypoint fix signal upon receiving the activation signal. The waypoint fix signal is transmitted to the position specifying unit 125 where the position specifying unit 125 is further configured to transmit the waypoint fix signal to the navigation route setting unit 129.

Further, the display unit 115 is communicatively coupled with the navigation route setting unit 129, where the route setting unit 129 is configured to determine the navigation route by connecting the navigation start point S, one or more waypoints of the plurality of waypoints (103b, 103c, ..., 103f), and the navigation destination point D. The route setting unit 129 uses the waypoint fix signal from the waypoint fix unit 127 to determine which potential waypoint should be connected with the latest waypoint of the plurality of waypoints (103b, 103c, ..., 103f) in order to determine the safest navigation route. The navigation route optimized for safety is displayed on the display 115. In another embodiment, the optimized navigation route may be displayed on the user device 103. In some embodiments, the route setting unit 129 communicates directly with the user device 103 such as the ECDIS through the network 107 to determine the optimized navigation route.

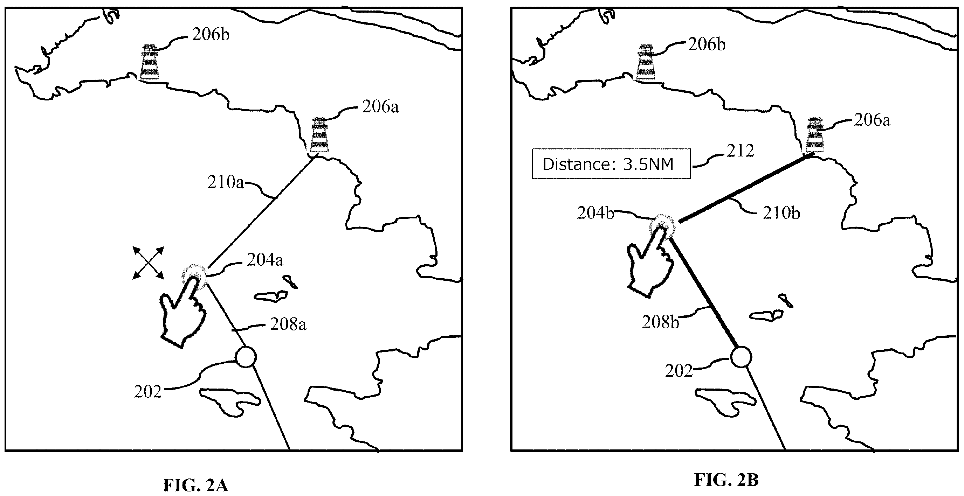

The user 105 inputs position data associated with the potential waypoint through the display 115 of the navigation planning device 101. In another embodiment, the user 105 may input the position data associated with the potential waypoint through the user device 103. In both the cases, the user interface shown to the user 105 to receive the position data remains same. A detailed explanation associated with a user interface used by the user 105 to input different position data of the potential waypoint associated with the navigation route is explained below with respect to FIG. 2A-2B. FIG 2A-2B explained below provides a detailed description of the user interface used to input position data of the potential waypoint either through the display 129 or the user device 103.

FIG. 2A illustrates a user interface, where the position of a potential waypoint 204a is changed, in accordance with an example embodiment. The user interface comprises a latest waypoint 202 that is part of the plurality of waypoints (103b, 103c, ..., 103f), the potential waypoint 204a, and a plurality of targets 206a, 206b. The latest waypoint 204a corresponds to the latest waypoint 103c in FIG.1B.The user 105 may input the potential waypoint 204a and move the position of the potential waypoint 204a by touching at specific locations, moving the cursor on the display panel, or by inputting numerical data in the navigation map displayed on the user interface. The user interface further comprises a first bar 208a and a second bar 210a. The first bar 208a is a line connecting the latest waypoint 202 with the potential waypoint 204a. The second bar 210a is the line connecting the potential waypoint with the target 206a. When the potential waypoint 204a is moved, the first bar 208a and the second bar 210a moves along with the potential waypoint 204a. The first bar 208a and the second bar forms an angle that is calculated by the position specifying unit 125. The position specifying unit 125 determines whether the angle formed by the first bar 208a and the second bar 210a is equal to a threshold value. The threshold value may be preset or dynamically set. In an embodiment, when the threshold value is preset, the threshold value is equal to 90 degrees. Further, the position specifying unit 125 calculates distance of the potential waypoint 204a from the target 206a. The position specifying unit 125 outputs an activation signal when the position of the potential waypoint 204a is located such that the angle between the first bar 208a and the second bar 210a is equal to the threshold value as shown in FIG 2B.

FIG.2B illustrates a user interface displaying an activation signal when the position of the potential waypoint 204b is determined, in accordance with an example embodiment. When the angle between the first bar 208a and the second bar 210a is equal to the threshold value of 90 degrees, or is close to 90° according to a predetermined criterion, the position specifying unit 125 outputs the activation signal. The activation signal is in the present embodiment provided to the first bar 208a and the second bar 210a. The display 115 changes the display of the first bar from 208a to 208b and the second bar from 210a to 210b based on the activation signal. The display 115 changes one or more of colour, contrast, thickness or aspect of the first bar (208) and the second bar (210) based on the activation signal as shown in 208b and 210b. Further, the position specifying unit 125 may as well (in a specific embodiment) calculate the distance of the potential waypoint 204b from the target 206a. The distance is calculated in nautical miles (NM).

The user can (in the specific embodiment) check whether the distance between the potential waypoint 204b and the target 206a fulfils a predetermined criterion (such as being at or below a threshold) to determine whether the potential waypoint 204b can be added to the next waypoint. When an activation signal is received, and in case of the specific embodiment, when the distance fulfils the predetermined criterion, the potential waypoint 204b may be automatically determined to be the next waypoint, or it may be set to the next waypoint after being inputted a waypoint fix signal to fix the next waypoint by the users. Alternatively, the method may as well proceed to output the activation signal only when the distance fulfils a predetermined criterion such as being at or below a threshold.

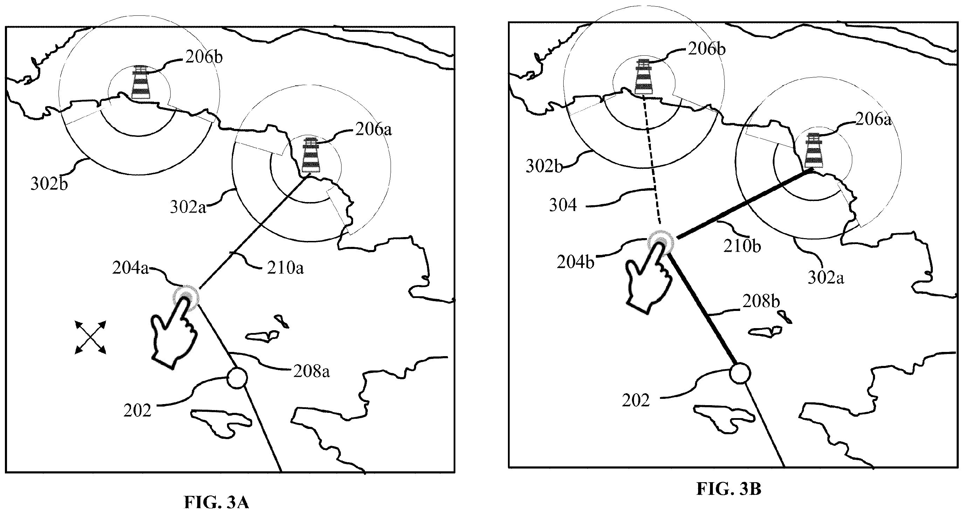

The calculated distance is displayed by the display 115 at 212, which is in an area near the potential waypoint 204b. The target 206a is selected from the plurality of targets 206a, 206b as shown in FIG. 3A-3B.

FIG. 3A illustrates a user interface displaying positional information of plurality of targets 206a, 206b, in accordance with an example embodiment. The positional information of the plurality of targets 206a, 206b further comprises a plurality of concentric half circles 302a, 302b arranged around the plurality of targets 206b, 206a respectively to indicate distance from the plurality of targets 206b, 206a. For example, the distance may be incremented by 1NM at each half circle of the plurality of concentric half circles 302a, 302b. Therefore, the user 105 is aware of the approximate distance from the plurality of targets 206a, 206b based on the number of concentric half circles arranged around the plurality of targets 206a, 206b. When the potential waypoint 204a is selected by the user 105, the processing part 113 searches for the plurality of targets 206a, 206b that are present near the position of the potential waypoint 204a. The processing part 113 calculates the distance of the plurality of targets 206a, 206b from the potential waypoint 204a along with the angle to provide the activation signal as shown in FIG. 3B.

FIG. 3B illustrates a user interface displaying the activation signal along with the positional information of plurality of targets 206a, 206b in accordance with an example embodiment. The user interface comprises the latest waypoint 202, the potential waypoint 204b, and the plurality of targets 206a, 206b. When the user 105 selects the position of the potential waypoint 204b, the position specifying unit 125 of the processing part 113 is configured to search from the chart data, the plurality of targets 206a, 206b where the plurality of targets 206a, 206b includes one or more of a stationery landmark object and a moving object located within a predetermined distance from the potential waypoint 204b. The stationery landmark object may include fixed objects such as a light house. The moving object may include objects such as a buoy that move on the water body.

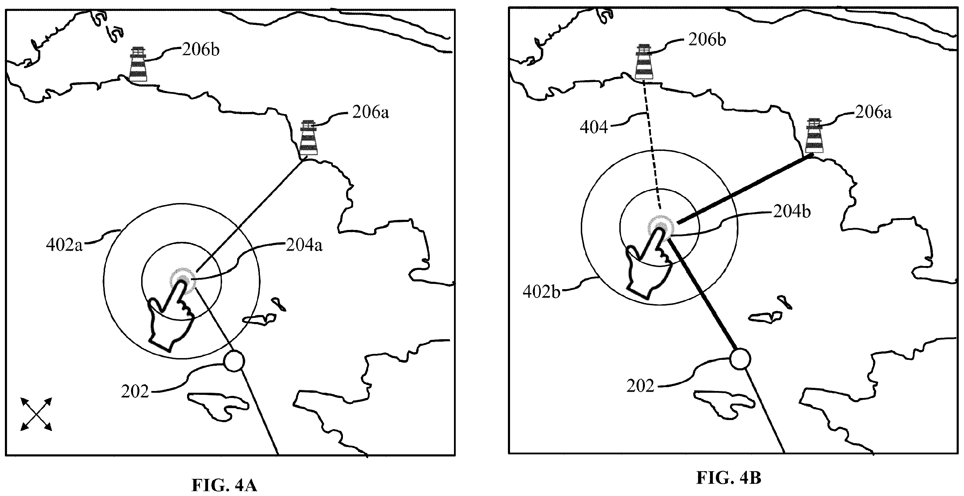

The position specifying unit 125 calculates the distance of the potential waypoint 204b from each of the plurality of targets 206a, 206b along with the angle. A dotted line 304 connecting the potential waypoint 204b with the target 206b is displayed by the display 115 indicating that the position specifying unit 125 takes into consideration, the distance and angle of the potential waypoint 204b from the target 206b in addition to calculating the distance and the angle of the potential waypoint 204b from the target 206a. Based on the calculation, the position specifying unit 125 selects the target from the plurality of targets 206a, 206b such that the distance of the potential waypoint 204b from the plurality of targets 206a, 206b is minimum, in addition to the angle of the potential waypoint 204b from the plurality of targets 206a, 206b being equal to the threshold value. The target 206a that satisfies both these criteria is selected from the plurality of targets 206a, 206b. Further, the position specifying unit 125 outputs the activation signal selecting the target at which the calculated angle is equal to a threshold value. The activation signal is provided to the first bar 208a and the second bar 210a. The display 115 changes the display of the first bar from 208a to 208b and the second bar from 210a to 210b based on the activation signal. The display 115 changes one or more of colour, contrast, thickness or aspect of the first bar (208) and the second bar (210) based on the activation signal as shown in 208b and 210b respectively. In addition to calculating the distance from the plurality of targets 206a, 206b, the navigation planning device 101 also calculates the distance from the potential waypoint 204a, 204b based on the positional information as explained in FIG. 4A-4B.

FIG. 4A illustrates a user interface displaying a positional information of the potential waypoint 204a, in accordance with an example embodiment. The user interface comprises the latest waypoint 202, the potential waypoint 204a, and the plurality of targets 206a, 206b. The positional information of the potential waypoint 204a comprises a plurality of concentric full circles 402a arranged around the potential waypoint 204a to indicate distance from the potential waypoint 204a. For example, the distance may be incremented by 1NM at each circle of the plurality of concentric full circles 402a. Therefore, the user 105 is aware of the approximate distance from the potential waypoint 204a based on the number of concentric circles arranged around the potential waypoint 204a. The processing part 113 calculates the distance of the plurality of targets 206a, 206b from the potential waypoint 204a along with the angle to provide the activation signal as shown in FIG. 4B.

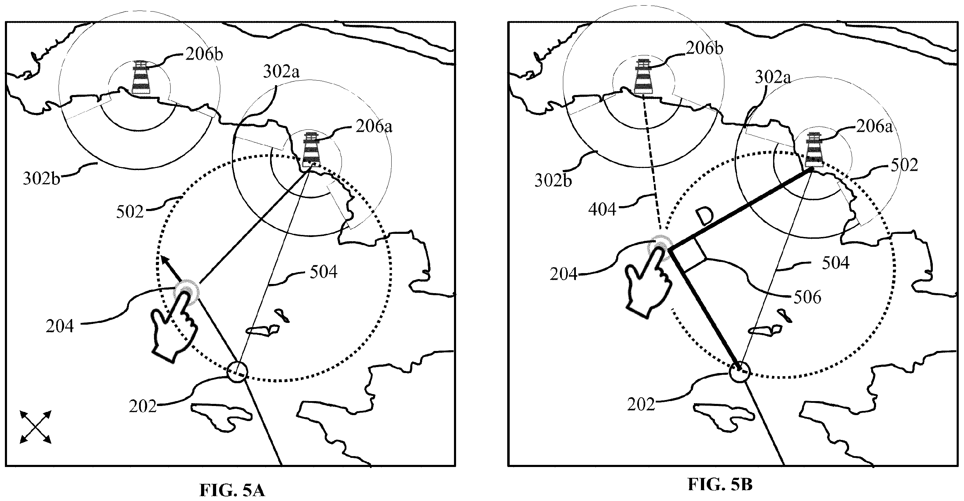

FIG. 4B illustrates a user interface displaying the activation signal along with the positional information of a potential waypoint 204b, in accordance with an example embodiment. When the user 105 selects the position of the potential waypoint 204b, the position specifying unit 125 of the processing part 113 displays a plurality of concentric circles 402b around the potential waypoint 20b. Further, a dotted line 404 connecting the potential waypoint 204b with the target 206b is displayed by the display 115 indicating that the position specifying unit 125 takes into consideration, the distance and angle of the potential waypoint 204b from the target 206b in addition to calculating the distance and the angle of the potential waypoint 204b from the target 206a. The calculation of the angle by the position specifying unit 125 is explained in FIG.5A-5B below.

FIG. 5A illustrates a user interface displaying a plurality of dots arranged to form a first circle 502, in accordance with an example embodiment. The user interface further comprises the latest waypoint 202, the potential waypoint 204, the plurality of targets 206a, 206b, and a line 504. The line 504 corresponds to a diameter of the first circle 502. When the user 105 inputs the potential waypoint 204, the position specifying unit 125 is configured to calculate an intersection position of two circles, where the first circle 502 is having the diameter of the line 504 connecting the target 206a and the latest waypoint 202, and second circle is the plurality of half circles 302a, 302b having a radius of a given distance around the target 206a. The position specifying unit 125 is further configured to output the calculated intersection position to indicate the distance between the potential waypoint 204 and the target 206a. Further, the position of the potential waypoint 204 is located on circumference of the first circle 502. When the position of the potential waypoint 204 is moved, the diameter 504 of the first circle 502 varies according to the change in position of the potential waypoint 204. Further, as the potential waypoint is located at the circumference of the first circle 502, the position specifying unit 125 implements Thales' theorem in determining the position of the potential waypoint 204 that is at an angle of 90 degrees from the target 206a as explained in FIG. 5B.

FIG. 5B illustrates a user interface displaying the activation signal along with the plurality of dots arranged to form the first circle 502, in accordance with an example embodiment. The position specifying unit 125 calculates the distance and angle between the potential waypoint 204 and the target 206b as denoted by dotted line 404. The position specifying unit 125 also calculates the distance and angle 506 between the potential waypoint 204 and the target 206a. The activation signal is outputted by the position specifying unit 125 when the angle 506 of the potential waypoint 204 is equal to the threshold value. The threshold value is pre-set or dynamically set by the user 105.

In an embodiment, when the threshold value is pre-set, the threshold value is equal to 90 degrees. The position specifying unit 125 provides the activation signal to the first bar connecting the latest waypoint 202 with the potential waypoint 204 and the second bar connecting the potential waypoint 204 with the target 206a. As shown in figure 5B, the potential waypoint 204 is perpendicular to the target 206a. Subsequently, the display 115 is configured to change one or more of colour, contrast, thickness or aspect of the line connecting the potential waypoint 204 with the target 206a based on the activation signal. Further, the waypoint fix unit 121 is configured to generate a waypoint fix signal upon receiving the activation signal. When an activation signal is received, the potential waypoint 204b may be automatically determined to be the next waypoint, or it may be set to the next waypoint after being inputted a waypoint fix signal to fix the next waypoint by the users. The waypoint fix unit 121 is configured to add the potential waypoint 204 to the navigation route based on the waypoint fix signal. In this way, the potential waypoint 204 that is perpendicular to the target 206a.

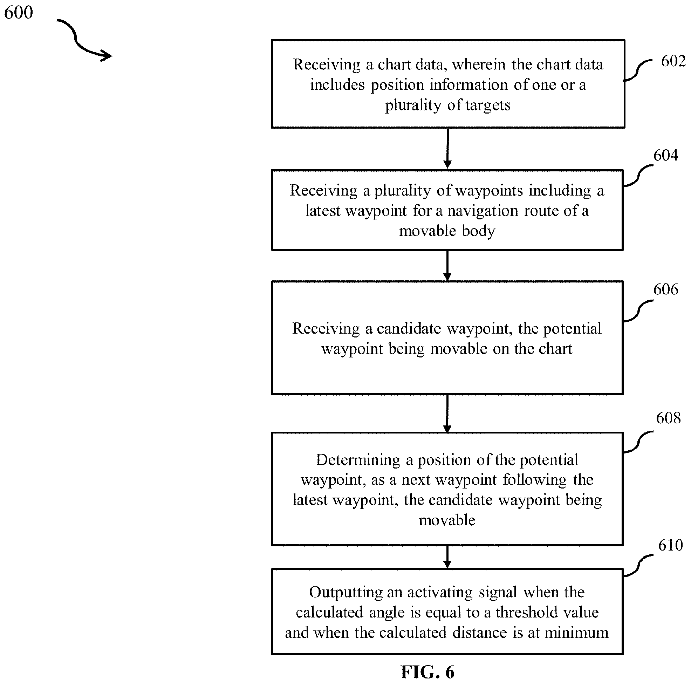

FIG. 6 is a flowchart that illustrates steps of a navigation planning method 600 executed by the navigation planning device 101, in accordance with an example embodiment.

At step 602, a chart data is received by the chart data receipt unit 119. The chart data includes position information of one or a plurality of targets 206a, 206b. The plurality of targets 206a, 206b are pre-loaded in the chart data. Further, the user 105 may also enter information related to the plurality of targets 206a, 206b during navigation. The chart data is stored in the database 109 and is communicatively coupled to the navigation planning device 101. In an embodiment the chart data may be stored in a memory 111 of the navigation planning device 101.

At step 604, a plurality of waypoints (103b, 103c, ..., 103f) for a navigation route of a movable body is received. The movable body is a vessel or an aircraft. The plurality of waypoints (103b, 103c, ..., 103f) includes a latest waypoint 202. The plurality of waypoints (103b, 103c, ..., 103f) are received by the waypoint receipt unit 121.

At step 606, a potential waypoint 204 is received by the potential waypoint receipt unit 123. The potential waypoint 204 is being movable on the chart. The potential waypoint 204 is moved on the chart by the user 105 by touching locations of interest in the chart.

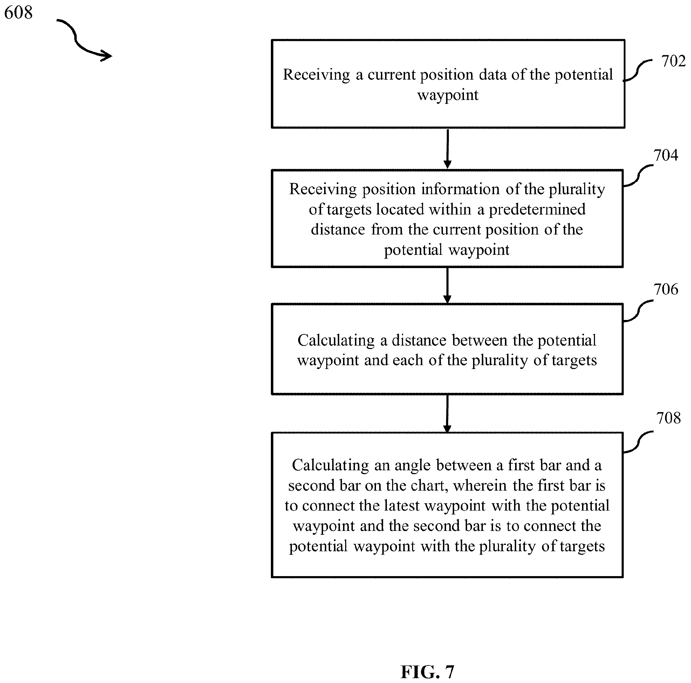

At step 608, a position of the potential waypoint 204, as a next waypoint following the latest waypoint 202 is determined by the position specifying unit 125. The determination of the position of the potential waypoint 204 is explained in FIG. 7.

At step 610, an activation signal is outputted by the position specifying unit 125 when the calculated angle is equal to a threshold value. The activation signal ensures that the potential waypoint is added to the navigation route of the movable body such as a vessel or an aircraft.

FIG. 7 is a flowchart that illustrates steps for determining position of potential waypoint 204 executed by the position specifying unit 125, in accordance with an example embodiment.

At step 702, a current position data of the potential waypoint 204 is received by the position specifying unit 125 from the potential waypoint receipt unit 123.

At step 704, position information of the plurality of targets 206a, 206b located within a predetermined distance from the current position of the potential waypoint 204 is received by the position specifying unit 125 from the chart data receipt unit 119.

At step 706, a distance between the potential waypoint 204 and each of the plurality of targets 206a, 206b is calculated by the position specifying unit 125.

At step 708, an angle between a first bar 208 and a second bar 210 on the chart is calculated by the position specifying unit 125 where the first bar 208 is to connect the latest waypoint 202 with the potential waypoint 204 and the second bar 210 is to connect the potential waypoint 202 with the plurality of targets 206a, 206b. The angle between the potential waypoint 204 and the target 206a is calculated by implementing the Thales theorem.

Example embodiments of the present invention may thus provide for the navigation planning device 101 and the navigation planning method 600 that ensure accurate and easy selection of the potential waypoint 204 so as to determine the navigation route for a movable body such as a vessel or an aircraft that is optimized for safety. To that end, the navigation planning device 101 receives a chart data, wherein the chart data includes position information of one or a plurality of targets 206a, 206b. The navigation planning device 101 receives a plurality of waypoints (103b, 103c, ..., 103f) including a latest waypoint 202 for a navigation route of the movable body. Further, the navigation planning device 101 receives a potential waypoint 204, the potential waypoint 204 being movable on the chart, where the navigation planning device 101 is characterized by determining a position of the potential waypoint 204, as a next waypoint following the latest waypoint 202, the potential waypoint 204 being movable. The potential waypoint 204 is determined by receiving a current position data of the potential waypoint 204, receiving position information of the plurality of targets 206a, 206b located within a predetermined distance from the current position of the potential waypoint 204, calculating a distance between the potential waypoint 204 and each of the plurality of targets 206a, 206b, calculating an angle 506 between a first bar 208 and a second bar 210 on the chart, where the first bar 208 is to connect the latest waypoint 202 with the potential waypoint 204 and the second bar 210 is to connect the potential waypoint 204 with the plurality of targets 206a, 206b, and outputting an activation signal when the calculated angle is equal to a threshold value.

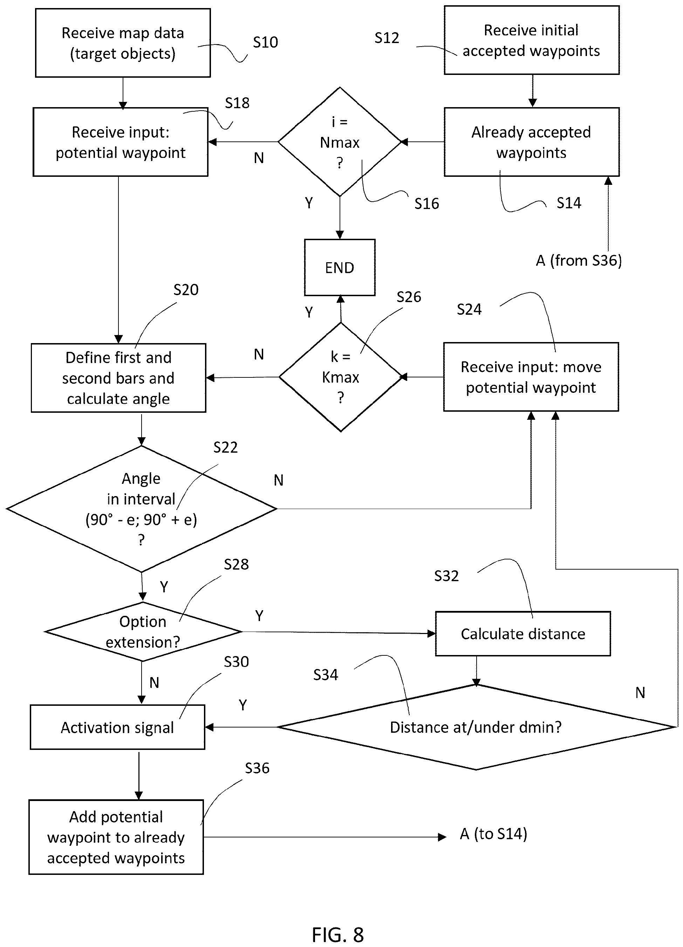

FIG. 8 is an extended flowchart illustrating a method according to a preferred embodiment of the invention, that method presently encompassing multiple aspects of different otherwise per se preferred embodiments at once.

The method starts with the step S10 of receiving of map data (target objects). Such map data, or chart data, may be received from a storage device that is provided locally within, or at, the movable body, namely a naval vessel, or ship. (The invention is as well applicable to an aircraft route.) Alternatively, the map data may be received (e.g., from an external storage device) via a network, wherein the movable body needs only to comprise an interface for communicating with that network. The map data indicates the geographical environment for the planned route, with the target objects. The target objects correspond to the targets discussed above such as targets 206a, 206b in Fig. 2A, 2B, 3A, 3B, 4A, and 4B.

For planning the route, with the present embodiment, one needs to have a starting point defined. This is provided by step S12 wherein initial accepted waypoints are received. At least one initial accepted waypoint is needed. This might be the current position of the movable body/the ship. There might as well already be known accepted waypoints resulting from a former performing of the method, or of an alternative method. The initial accepted waypoints are received from a storage device, or, in the case of a single initial accepted waypoint, namely of the current position of the movable body, from a system for identifying that position, such as the Global Positioning System, GPS.

The method thus continues with step S14 wherein already accepted waypoints are present, e. g., in a temporary memory, such as a Random Access Memory, RAM.

Starting with the basic setting of i = 0, each time step S14 is reached, i is increased by 1 (by one). i may thus count the number of turns when step S14 is reached. Alternatively, i may count the number of accepted waypoints; then, i is the number of the initial accepted waypoints received in step S12 (basic setting: i = m, m natural number > 0), plus the number of the times step S14 is reached.

In step S16, it is checked whether i has reached a value of Nmax, a maximum value (of times or of accepted waypoints).

In step S16 alternatively, any other criterion might be applied which enables to determine whether the route to be planned is complete, or at least whether the method should be terminated.

When the criterion is fulfilled, in the case of Fig. 8, when i = Nmax ("Y" = "YES"), the method ends ("END"). When the criterion is not fulfilled ("N" = "NO"), the method proceeds to step S18.

In step S18, an input is received, namely with respect to a display (display means) where the map data, and these including indications of the target objects, is displayed. The display means might, as mentioned earlier, be a touch screen and the input might be with respect to the positions on the touch screen where the touch screen shows specific information (which might be simply the information that there is the sea with respect to not being a terrestrial region). As an additional means for providing input, or alternatively, a computer mouse or a touchpad, or a numerical input of coordinate data, or the like might be used. Then, display means other than a touch screen might be provided.

The input indicates a point called herein "potential waypoint", which is the indication of a position (point on the map) that bears the potential to become an "accepted waypoint".

To check this, in the following step S20, first and second bars are defined such as explained above with respect to figures 2A and the following. Specifically, the first bar might correspond to the first bar 208a shown in Fig. 2A, i.e., the line connecting the latest accepted waypoint 202 with the potential waypoint 204a. The latest waypoint is the latest waypoint which has been added to the accepted waypoints in step S14 when step S14 was performed the last time. The potential waypoint is the one received in step S18. The second bar might correspond to the second bar 208a shown in Fig. 2A, i.e., the line connecting the potential waypoint with a target object, in the case of Fig. 2A with the target 206a. The target object that is selected for this purpose is commonly the one which is the least distant from the potential waypoint.

Having defined the first and second bars, the angle between these bars is calculated, still in step S20.

Turning to step S22, it is checked whether the calculated angle fulfills a predetermined criterion. Depending on the granularity of the map data, the criterion might be defined. Generally, it is optimum if the angle in the interval is exactly equal to 90°. Due to a (finite) pixel size, such feature cannot always be perfectly fulfilled. Hence, one defines an interval about 90° and if the angle calculated in step S20 falls within that interval, the criterion is fulfilled. This is, according to Fig. 8, defined as the interval (90°- ε1; 90° + ε2), wherein ε1 and ε2 both are indicated in degrees and preferably are not higher than 5°, still more preferably not higher than 2°, still further preferably not higher than 1°. Hence, with the criterion it is checked whether the angle falls into a sub-interval of the interval of 85° to 95°, or that interval of 85° to 95 itself. The predetermined interval can be defined with ε1 ≠ ε2, depending on the pixel shape and size with the map data or with the display means. However, preferably, ε1 = ε2.

As long as the angle in the interval has not reached the predetermined criterion, in step S24, further input is received with respect to the screen. The potential waypoint as defined by the input in step S18 is now moved and thereby newly specified, i.e., newly defined. Such movement can be provided by a "drag and drop"-like movement of a user's finger, or similar "drag-and-drop" movement with a computer mouse or a touchpad or in any other manner that makes sense. One might as well simply input (e.g., via a keyboard) the coordinates of a vector for moving the potential waypoint ("± x pixels horizontally and ± y pixels vertically", wherein x and y are natural numbers or 0, i.e., are one of 0, 1, 2, 3, ...).

Following receipt of the input in step S24, in step S26, it is checked whether another criterion, here with respect to the movement of the potential waypoint, has been fulfilled. For instance, one may count the numbers of the inputs at step S24 as k and check whether k = Kmax, wherein Kmax is the maximum number of iterations of movement of the potential waypoint. For instance, if such a maximum number is reached, ("Y" = "YES"), the method may terminate ("END"). This avoids that the user does not permanently improperly handle the input. Alternatively, from step S26, one might offer the user to provide again the input of a potential waypoint in step S18. (This latter alternative is not shown in Fig. 8).

In case that the criterion in step S26 is not fulfilled ("N" = "NO"), again the first and second bars are defined and the angle is calculated, and again in step S22, it is checked whether the angle fulfills the predetermined criterion.

It is clear that as long as Kmax is not reached, at some time the angle may reach the value of 90° or a value close to 90° ("Y" = "YES"). The present method generally then goes to step S30, but in an alternative, the method is extended. This is represented here by step S28 offering to check whether the extension option has been selected. If this is not the case, ("N" = "NO"), in step S30 an activation signal is output. As explained hereinabove, the activation signal might serve to indicate to the user that the potential waypoint has met the criterion and might be accepted. The method in that case goes further to step S36, as explained in detail hereinafter. Turning now to the situation that the extension is selected ("Y" = "YES") in step S28, then, in step S32, the distance is calculated between the potential waypoint (that might have been moved in step S24 once or multiple times), and the target object with respect to which the second bar had been defined. Thereafter, in step S34, it is checked whether the distance has reached a minimum ("distance at dmin", dmin being a minimum distance), or is even below of the minimum ("distance under dmin"). Should the distance calculated in step S32 be too high, then from step S34, one returns again to step S24, for moving the potential waypoint again, closer to the respective target object (or possibly, to another target object where dmin might be more easily reached).

In case, however, that the distance is at or under dmin, with the method in the version that the option of the extension has been selected ("Y" in step S28), or as well when the extension has not been selected, an activation signal is output according to step S30. A change of one or more of colour, contrast, thickness or aspect of the first bar or the second bar, or showing an additional indication text, sign, or the like, may be provided based on (and as a result of) the activation signal.

The method in both sub-versions, the non-extended one and the extended one, goes from step S30 preferably to step S36. In step S36, the potential waypoint is added to the already accepted waypoints. This goes further than simply signalling to the user by the activation signal S30 that the potential waypoint can be accepted. Step S36 might be provided automatically following the production of the activation signal in step S30, or might require an additional user input.

The method goes from step S36 further to step S14 to define the already accepted waypoints. The latest accepted waypoint now is the latest one that has been added in step S36. The method might terminate following the check in step S16, or continue by providing/receiving again an input as to a potential waypoint, in step S18.

According to an alternative not depicted here, the step S30 always precedes step S28, and step S34 goes directly to step S36. Then, the activation signal is output as a result of a positive outcome of checking in step S22 whether the angle fulfils the predetermined criterion. However, the activation signal the may not always lead to adding the potential waypoint to the already accepted waypoints, but the latter may require in addition to the output of the activation signal that the distance be small (as according to step S34).

Moreover, according to still another alternative not depicted here, there may be two activation signals, a first one for showing that the angle fulfils the predetermined criterion (causing change of colour, contrast, thickness or aspect of the first bar or the second bar, or showing an additional indication text, sign, or the like), and a second one for showing that the distance fulfils the predetermined criterion (that may either: cause another change of colour, contrast, thickness or aspect of the first bar or the second bar, cause showing another additional indication text, sign, or the like, by changing the previously changed colour, contrast, thickness or aspect of the first bar or the second bar, or the additional indication text, sign, or the like, or may cause: changing at least one of the above features that has not been changed in reaction to the first activation signal).

The method results in obtaining a sequence of already accepted waypoints, of which at least a number of the last ones that have been added results from user input with respect to the screen. Preferably, all accepted waypoints are defined in such a manner, or at least all besides the first accepted waypoint, which is the location of the naval vessel.

Many modifications and other embodiments of the inventions set forth herein will come to mind of one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A navigation planning device (101) for obtaining a navigation route of a movable body, the navigation route composed of accepted waypoints, the navigation planning device (101) comprising:
a map data receipt unit (119) configured to receive map data, wherein the map data include position information of a single target object or of a plurality of target objects (206a, 206b);
a waypoint receipt unit (121) configured to receive a plurality of already accepted waypoints (103b, 103c, ..., 103f) including a latest accepted waypoint (202) for the navigation route, the accepted waypoints not moveable by a specific kind of user input;
a potential waypoint receipt unit (123) comprising a display and
configured to receive first input by a user (105), the input specifying and thus defining, on the map, the position of a potential waypoint (204a, 204b) following in the navigation route the latest accepted waypoint (202), the potential waypoint (204a, 204b) being movable by the user (105) on the map for newly defining same by additional input of the specific kind with regard to the display;
a position specifying unit (125) configured to each time the potential waypoint (204a, 204b) is defined: define a first bar (208) that connects the latest accepted waypoint (202) with the potential waypoint (204a, 204b), define a second bar (210) that connects the potential waypoint (204a, 204b) with one of the target objects (206a, 206b), and calculate an angle (506) between the first bar (208) and the second bar (210) on the map,
wherein an activating signal is output by the position specifying unit (125) when as a result of the first input or the movement of the potential waypoint (204a, 204b) by the user with additional input following the first input the calculated angle becomes equal to a value that is equal to a predetermined fixed value or is a value included in a predetermined interval included in the interval of 85° to 95°.

2. The navigation planning device (101) of claim 1, wherein the position specifying unit (125) is configured to calculate a distance between the potential waypoint (204a, 204b) and each of the target objects (206a, 206b) for which position information has been received by the map data receipt unit (119), and wherein the second bar connects the potential waypoint (204a, 204b) with the closest target object.

3. The navigation planning device (101) of claim 2, wherein the position specifying unit (125) is further configured to
define a first circle and a second circle, wherein the diameter of the first circle is provided by the first bar and wherein the second circle is a circle having a predetermined radius defined around a respective target object (206a),
wherein the position specifying unit (125) is further configured to calculate an intersection position of the two circles, and to use the calculated intersection position to calculate the distance between the potential waypoint (204a, 204b) and the respective target object (206a).

4. The navigation planning device (101) of any one of the preceding claims, wherein at least one of the following features is provided:
a) the display is a touch screen and the specific kind of input relates to the user touching at specific locations on the touch screen;
b) the display is a display panel with a cursor and the specific kind of input relates to moving the cursor on said display panel, in particular by means of a computer mouse or a touchpad;
c) the specific kind of input relates to inputting numerical data, in particular by means of a keyboard.

5. The navigation planning device (101) of any one of the preceding claims,
further comprising:
a waypoint fix unit (121) configured to generate a waypoint fix signal upon receiving the activating signal; and
wherein the position specifying unit (125) is further configured to add the potential waypoint (204a, 204b) to the navigation route as the new latest accepted waypoint based on the waypoint fix signal.

6. The navigation planning device (101) of any one of the preceding claims, wherein the plurality of targets (206a, 206b) comprise one or more of a stationary landmark object and a moving object.

7. The navigation planning device (101) of claim 6, wherein to receive position information of the plurality of target objects (206a, 206b), the position specifying unit (125) is further configured to search from the map data, the stationary landmark object and the moving object located within a predetermined distance.

8. The navigation planning device (101) of any one of the preceding claims, wherein the display (115) is configured to:
Change, based on the activation signal, one or more of colour, contrast, thickness or aspect of the first bar (208) and/or one or more of colour, contrast, thickness or aspect the second bar (210).

9. A navigation planning method (600), for obtaining a navigation route of a movable body, the navigation route composed of accepted waypoints, the navigation planning method comprising:
receiving map data, wherein the map data includes position information of a single target object or of a plurality of target objects (206a, 206b);
receiving a plurality of already accepted waypoints (103b, 103c, ..., 103f) including a latest accepted waypoint (202) for the navigation route, the accepted waypoints not moveable by a specific kind of user input;
receiving first input, by a user (105), the input specifying and thus defining, on the map, the position of a potential waypoint (204a, 204b) following in the navigation route the latest accepted waypoint (202), and receiving additional input of the specific kind for moving and thus newly defining the potential waypoint (204a, 204b) on the map;
each time the potential waypoint (204a, 204b) is newly defined: defining a first bar (208) that connects the latest accepted waypoint (202) with the potential waypoint (204a, 204b), defining a second bar (210) that connects the potential waypoint (204a, 204b) with one of the target objects (206a, 206b), and calculating an angle (506) between the first bar (208) and the second bar (210) on the map; and
outputting an activating signal when as a result of the first input or the movement of the potential waypoint (204a, 204b) by the user with additional input following the first input the calculated angle becomes equal to a value that is equal to a predetermined fixed value or is a value included in a predetermined interval included in the interval of between 85° and 95°.

10. The navigation planning method (600) of claim 9, further comprising calculating a distance between the potential waypoint (204a, 204b) and each of the target objects (206a, 206b) for which position information has been received by the map data receipt unit (119), and wherein the second bar connects the potential waypoint (204a, 204b) with the closest target object

11. The navigation planning method (600) of claim 9 or claim 10, further comprising:
generating a waypoint fix signal upon receiving the activating signal; and
adding the potential waypoint (204a, 204b) to the navigation route as the new latest accepted waypoint based on the waypoint fix signal.

12. The navigation planning method (600) of any one of claims 9 to 11, wherein the fixed value is 90°.

13. A non-transitory computer readable medium, the medium storing instructions that, when executed by one or more processors, cause a computing device to perform a method that comprises:
receiving map data, wherein the map data includes position information of a single target object or of a plurality of target objects (206a, 206b);
receiving a plurality of already accepted waypoints (103b, 103c, ..., 103f) including a latest accepted waypoint (202) for the navigation route, the accepted waypoints not moveable by a specific kind of user input;
receiving first input, by a user (105), the input specifying and thus defining, on the map, the position of a potential waypoint (204a, 204b) following in the navigation route the latest accepted waypoint (202), and receiving additional input of the specific kind for moving and thus newly defining the potential waypoint (204a, 204b) on the map;
each time the potential waypoint (204a, 204b) is newly defined: defining a first bar (208) that connects the latest accepted waypoint (202) with the potential waypoint (204a, 204b), defining a second bar (210) that connects the potential waypoint (204a, 204b) with one of the target objects (206a, 206b), and calculating an angle (506) between the first bar (208) and the second bar (210) on the map; and
outputting an activating signal when as a result of the first input or the movement of the potential waypoint (204a, 204b) by the user with additional input following the first input the calculated angle becomes equal to a value that is equal to a predetermined fixed value or is a value included in a predetermined interval included in the interval of 85° to 95°.
